# EUROPÄISCHE PATENTANMELDUNG

(11) **EP 3 241 434 A1**
(43) Veröffentlichungstag der Anmeldung: **08.11.2017**
(21) Anmeldenummer: 17167896.4
(22) Anmeldetag: 25.04.2017
(51) Int. Cl.: A01K 51/00

(54) **VERFAHREN ZUR FERNÜBERWACHUNG EINER VERDUNSTUNGSRATE EINES BEHANDLUNGSMITTELS IN EINEM BIENENSTOCK**

(30) Priorität: 04.05.2016 DE 102016207687
(71) Anmelder: Robert Bosch GmbH, 70442 Stuttgart (DE)
(72) Erfinder: Ferhadbegovic, Bojan, 70372 Stuttgart (DE); Staschulat, Jan, 71263 Weil Der Stadt (DE)

(57) **Zusammenfassung**

Verfahren (100) zur Fernüberwachung einer Verdunstungsrate eines Behandlungsmittels (34), welches von einem Verdunstungselement (36) insbesondere in einem Bienenstock (20) abgegeben wird, gekennzeichnet durch die folgenden Schritte:
- Erfassen (110) einer ersten physikalischen Größe des Verdunstungselements (36) oder der Umgebung (38) des Verdunstungselements (36), mittels einer Sensoreinheit (12);
- Übertragen (120) von zeitlich beabstandet erfassten ersten Messwerten, welche die erste physikalische Größe repräsentieren, an eine Rechnereinheit (16) mittels einer Kommunikationseinheit (14); und
- Ermitteln (130) der Verdunstungsrate des Behandlungsmittels (34) unter Verwendung der zeitlich beabstandet erfassten ersten Messwerte der ersten physikalischen Größe mittels der Rechnereinheit (16).

## Beschreibung

### Stand der Technik

Die Erfindung betrifft ein Verfahren zur Fernüberwachung einer Verdunstungsrate eines Behandlungsmittels, welches von einem Verdunstungselement, insbesondere in einem Bienenstock abgegeben wird und ein System zur Fernüberwachung der Verdunstungsrate nach Gattung der unabhängigen Ansprüche.

Die Varroamilbe stellt eine hohe Gefahr für die Europäische Biene dar. Die Bienenvölker sind nicht in der Lage die Milbe selbst abzuwehren und sterben im Falle eines Befalls. Daher muss die Europäische Biene dagegen behandelt werden. Dies geschieht heute mit Ameisensäure oder Oxalsäure, die in einem Behälter in den Bienenstock gebracht wird und dort über ein Tuch langsam verdunstet, bspw. mittels eines "Liebig-Verdunsters" oder eines "Nassenheider-Verdunsters". Dabei ist die Dosierung schwierig. Eine zu große Verdunstungsrate schädigt und tötet sogar die Bienen, während eine zu geringe Verdunstungsrate den Behandlungserfolg schmälert. Die Dauer der Behandlung muss mindestens 12 Tage betragen, da die Wabenzellen am 9. Tag verdeckelt werden und die junge Biene am 21. Tag schlüpft. Daher befinden sich Varroamilben für 12 Tage geschützt in verdeckelten Wabenzellen und sind für die Säure nicht erreichbar. Verdunstet die Ameisensäure zu früh vollständig, weil es im Bienenstock im Durchschnitt zu warm war, muss nachgefüllt werden. Verdunstet die Ameisensäure zu langsam, muss die Behandlung abgebrochen und wiederholt werden.

Imker richten sich nach den Wetterdaten, die sehr grob bis fast gar nicht mit den Gegebenheiten im Bienenstock zusammenhängen. Die Bienen heizen oder kühlen den Bienenstock aktiv und halten die Temperatur im Brutbereich bei ca. 35°C konstant, weitgehend unabhängig von der Außentemperatur. Der Verdunster jedoch ist außerhalb des Brutraums angeordnet, so dass die physikalischen Gegebenheiten in seiner Umgebung unbekannt sind.

Die Prüfung der Verdunstungsrate erfolgt heutzutage manuell alle paar Tage, wobei der Bienenstock geöffnet werden muss, was die Konzentration der Säure in diesem Zeitraum absenkt. Dies ist besonders bei Bienenstöcken, die entfernt aufgestellt sind, sehr umständlich und teuer, da die Entfernung häufig mehrere Kilometer beträgt. Daher wird seltener nachgeschaut, wodurch eine rechtzeitige Erkennung, ob die Verdunstungsrate bzw. -menge im gewünschten Bereich liegt deutlich erschwert wird. Der Erfolg der Behandlung hängt jedoch in hohem Maße von der Verdunstungsrate ab, so dass rechtzeitig entschieden werden muss, ob bspw. die Behandlung ggf. abgebrochen und neu angefangen oder die Säure nachgefüllt werden muss. Dies ist umso wichtiger wenn mehrere Völker nebeneinander stehen (was der Regelfall ist), da die Behandlung nur sinnvoll ist, wenn sie bei allen Völkern gleichzeitig und erfolgreich durchgeführt wird.

Die DE202009002120U1 offenbart einen Verdunster in dessen Umgebung die Temperatur gemessen wird und ferner die Konzentration des Schädlingsbekämpfungsmittels im Bienenstock, um in Abhängigkeit davon eine Dosierpumpe anzusteuern und damit die Schädlingsbekämpfungsmenge einzustellen.

Die DE60205585T2 offenbart ein System zur Fernüberwachung von Bienenstöcken, wobei u.a. die Temperatur und die Luftfeuchtigkeit in den Bienenstöcken gemessen und die entsprechenden Daten an eine Basisstation übertragen werden.

Die DE102013006265A1 offenbart eine Vorrichtung zur Bekämpfung vor Varroamilben, wobei die Temperatur, die Feuchtigkeit und die Sauerstoff-/Kohlenstoffkonzentration in dem Bienenstock gemessen werden und in Abhängigkeit davon ein Verdunster und eine Befeuchtungsvorrichtung angesteuert werden, um ein bestimmte Atmosphäre im Bienenstock einzustellen. Die Vorrichtung weist ferner eine Kommunikationseinrichtung auf, welche ausgebildet ist die Messwerte auszusenden.

### Offenbarung der Erfindung

Vor diesem Hintergrund werden mit dem hier vorgestellten Ansatz ein Verfahren zur Fernüberwachung einer Verdunstungsrate eines Behandlungsmittels sowie ein System zur Fernüberwachung einer Verdunstungsrate eines Behandlungsmittels gemäß den Hauptansprüchen vorgestellt.

Der hier vorgestellte Ansatz schafft ein Verfahren zur Fernüberwachung einer Verdunstungsrate eines Behandlungsmittels, welches von einem Verdunstungselement, insbesondere in einem Bienenstock abgegeben wird, gekennzeichnet durch die folgenden Schritte:
- Erfassen einer ersten physikalischen Größe des Verdunstungselements oder der Umgebung des Verdunstungselements, mittels einer Sensoreinheit;
- Übertragen von zeitlich beabstandet erfassten ersten Messwerten, welche die erste physikalische Größe repräsentieren, an eine Rechnereinheit mittels einer Kommunikationseinheit; und
- Ermitteln der Verdunstungsrate des Behandlungsmittels unter Verwendung der zeitlich beabstandet erfassten ersten Messwerte der ersten physikalischen Größe mittels der Rechnereinheit.

Der hier vorgestellte Ansatz schafft ferner ein System zur Fernüberwachung einer Verdunstungsrate eines Behandlungsmittels, welches von einem Verdunstungselement, insbesondere in einem Bienenstock abgegeben wird, mit
- einer Sensoreinheit, welche ausgebildet ist eine erste physikalische Größe des Verdunstungselements oder der Umgebung des Verdunstungselements zu ermitteln;
- einer Kommunikationseinheit, welche ausgebildet ist zeitlich beabstandet erfassten erste Messwerte, welche die erste physikalische Größe repräsentieren, zu übertragen; und
- einer Rechnereinheit, welche ausgebildet ist, die von der Kommunikationseinheit übertragenen zeitlich beabstandet erfassten ersten Messwerte zu empfangen und die Verdunstungsrate des Behandlungsmittels unter Verwendung der zeitlich beabstandet erfassten ersten Messwerte der ersten physikalischen Größe zu ermitteln.

Unter einer Verdunstungsrate kann im Rahmen der Erfindung eine resultierende Verdunstungsmenge pro Zeiteinheit, d.h. die Verdunstungsgeschwindigkeit verstanden werden. Die Zeiteinheit kann bspw. ein Tag sein.

Unter einem Behandlungsmittel kann im Rahmen der Erfindung ein Schädlingsbekämpfungsmittel, insbesondere zur Bekämpfung von Varroamilben verstanden werden, welches vorzugsweise Ameisensäure oder Oxalsäure aufweist oder aus Ameisensäure oder Oxalsäure besteht. Denkbar ist jedoch jedes dem Fachmann bekannte Behandlungsmittel, welche ggf. auch gegen andere Schädlinge einsetzbar ist. Das Behandlungsmittel ist hierbei flüssig ausgebildet.

Unter einem Bienenstock kann im Rahmen der Erfindung auch eine Bienenbeute oder ein Bienenkorb verstanden werden. Der Bienenstock bzw. die Bienenbeute kann als Magazinbeute ausgebildet sein und mehrere übereinander gestapelte Zargen aufweisen. Die oberste Zarge kann als Deckelzarge ausgebildet sein oder auf der obersten Zarge kann ein Deckel angeordnet sein.

Unter einem Verdunstungselement kann im Rahmen der Erfindung ein Element zum flächigen Verteilen einer zu verdunstenden Flüssigkeit verstanden werden. Das Verdunstungselement kann als Verdunstungstuch, Dochtpapier, Verdunstungsvlies oder Verdunstungsmatte ausgebildet sein. Das Verdunstungselement kann Teil einer Verdunstungsvorrichtung sein. Die Verdunstungsvorrichtung kann einem Vorratsbehälter aufweisen, welcher mittels einer Löcher aufweisenden Dosiereinheit das flüssige Behandlungsmittel bzw. das Schädlingsbekämpfungsmittel auf das Verdunstungselement träufelt, von dem aus das Behandlungsmittel im Bienenstock, insbesondere in einem Verdunstungsraum des Bienenstocks verdunstet und sich anschließend in im restlichen Bienenstock, insbesondere in einem Brutraum des Bienenstocks ausbreitet.

Die Sensoreinheit kann mehrere Sensorelemente bzw. Sensoren aufweisen. Die Sensoreinheit bzw. die Sensorelemente der Sensoreinheit können je nach Ausgestaltung in der Umgebung des Verdunstungselements angeordnet sein. D.h., mit anderen Worten, dass die Sensoreinheit bzw. die Sensorelemente der Sensoreinheit in der Nähe des Verdunstungselements, insbesondere in der Nähe der Verdunstungsfläche des Verdunstungselements angeordnet sein können. Bevorzugterweise ist die Sensoreinheit zumindest teilweise außerhalb des Brutraumes des Bienenstocks angeordnet. D.h., mit anderen Worten, dass der Verdunstungselement und die Sensoreinheit nicht im Brutraum direkt, sondern in einem separaten Verdunstungsraum, welcher bspw. durch die Deckelzarge des Bienenkorbes gebildet wird, angeordnet sind.

Die Kommunikationseinheit kann ausgebildet sein, Daten drahtlos, bspw. über Funk, WLAN, Bluetooth etc., und/oder leitungsgebunden zu empfangen und weiterzuleiten. Die Kommunikationseinheit kann mit einer oder mehreren Sensoreinheiten von einem oder mehreren Bienenstöcken verbunden sein, um alle empfangenen Daten an eine oder mehrere Rechnereinheiten weiterzuleiten.

Unter einer Rechnereinheit kann im Rahmen der Erfindung eine Einheit verstanden werden, welche ausgebildet ist, Signale und/oder Daten zu verarbeiten. Die Recheneinheit kann einen Signalprozessor, einen Mikrocontroller oder dergleichen aufweisen. Die Rechnereinheit kann die Kommunikationseinheit umfassen. Die Rechnereinheit kann ferner zumindest eine Speichereinheit zum Speichern von Signalen und/oder Daten aufweisen. Die Speichereinheit kann einen Cloud-Server, einen Flash-Speicher, einen EPROM oder eine magnetische Speichereinheit aufweisen. Die Rechnereinheit kann ferner zumindest eine Schnittstelle zu der Kommunikationseinheit zum Einlesen von Sensorsignalen bzw. Messwerten aufweisen. Die Rechnereinheit kann ferner eine Schnittstelle zum Ausgeben von Daten oder Messwerten an eine Anzeigeeinheit aufweisen. Die Rechnereinheit kann ausgebildet sein, die Verdunstungsrate des Behandlungsmittels anhand der Messwerte und ggf. weiterer Informationen mittels dem Fachmann bekannter Verfahren zu berechnen und/oder aus einer abgespeicherten Tabelle auszulesen. Die Tabelle kann empirische Werte aufweisen.

Durch das erfindungsgemäße Verfahren und das erfindungsgemäße System ist es nunmehr möglich, auf sehr einfache Art und Weise eine Überwachung einer Behandlung, bspw. der Varroabehandlung eines Bienenstocks durchzuführen und dabei sicherzustellen, dass bspw. der Imker, ohne zu dem Behandlungsort, als den Bienenstöcken hinfahren oder die Bienenstöcke öffnen zu müssen, die Erfolgsaussichten der Varroabehandlung einschätzen kann. Dadurch kann er rechtzeitig reagieren und die Behandlung abbrechen oder das Behandlungsmittel nachfüllen.

Es ist außerdem vorteilhaft, wenn die erste physikalische Größe eine Masse des Verdunstungselements oder eine Konzentration des verdunsteten Behandlungsmittels in der Luft in der Umgebung des Verdunstungselements ist. Bei der ersten Alternative kann die Sensoreinheit einen Masse- bzw. Gewichtssensor aufweisen, welcher die Masse des Verdunstungselements misst. Unter Zuhilfenahme eines Zeitparameters kann dann mittels der Rechnereinheit die Verdunstungsrate ermittelt werden. Hierbei kann die Ermittlung der Verdunstungsrate mittels diverser dem Fachmann bekannter Verfahren erfolgen. Die Verdunstungsrate kann bspw. durch Wiegen des Verdunstungselements zu verschiedenen Zeitpunkten ermittelt werden. Hierbei stellt die Verdunstungsrate die erste Ableitung der Masse nach der Zeit dar. Bei der zweiten Alternative kann die Sensoreinheit einen Konzentrationssensor aufweisen, welcher die Konzentration des verdunsteten Behandlungsmittels in der Luft in der Umgebung des Verdunstungselements, d.h. in der Nähe der Verdunstungsfläche des Verdunstungselements misst. Unter Zuhilfenahme eines Zeitparameters kann dann mittels der Rechnereinheit die Verdunstungsrate ermittelt werden. Hierbei kann die Ermittlung der Verdunstungsrate mittels diverser dem Fachmann bekannter Verfahren erfolgen. Die beiden physikalischen Größen, d.h. die Masse sowie die Konzentration, lassen sich sehr einfach und kostengünstig messen und erlauben gleichzeitig eine ausreichend genaue Ermittlung der Verdunstungsrate.

Es ist ferner vorteilhaft, wenn die folgenden weiteren Schritte durchgeführt werden:
- Erfassen einer zweiten physikalischen Größe der Umgebung des Verdunstungselements mittels der Sensoreinheit, wobei die zweite physikalische Größe von der ersten physikalischen Größe verschieden ist; und
- Übertragen von zeitlich beabstandet erfassten zweiten Messwerten, welche die zweite physikalische Größe repräsentieren, an die Rechnereinheit mittels der Kommunikationseinheit;
- wobei der Schritt des Ermittelns der Verdunstungsrate des Behandlungsmittels unter zusätzlicher Verwendung der zeitlich beabstandet erfassten zweiten

Messwerte der zweiten physikalischen Größe mittels der Rechnereinheit erfolgt. Hierbei ist es insbesondere vorteilhaft, wenn die erste physikalische Größe eine Lufttemperatur in der Umgebung des Verdunstungselements und die zweite physikalische Größe eine Luftfeuchtigkeit in der Umgebung des Verdunstungselements ist. Hierbei kann die Sensoreinheit einen Temperatursensor und einen Feuchtesensor oder alternativ auch einen kombinierten Sensor aufweisen, welcher sowohl die Lufttemperatur als auch die Luftfeuchtigkeit messen kann, aufweisen. Die erste physikalische Größe, d.h. die Lufttemperatur, und die zweite physikalische Größe, d.h. die Luftfeuchtigkeit, werden in der Luft in der Umgebung des Verdunstungselements, d.h. in der Nähe der Verdunstungsfläche des Verdunstungselements gemessen. Unter Zuhilfenahme eines Zeitparameters kann dann mittels der Rechnereinheit die Verdunstungsrate ermittelt werden. Hierbei kann die Ermittlung der Verdunstungsrate mittels diverser dem Fachmann bekannter Verfahren erfolgen. Die Verdunstungsrate kann z.B. in vorangegangenen Versuchen in Abhängigkeit von der Temperatur und der Luftfeuchtigkeit aufgezeichnet werden. Diese Größen werden in Form von Kennfeldern abgelegt und entsprechend ausgelesen. Diese beiden zweiten physikalischen Größen lassen sich sehr einfach und sehr kostengünstig messen und erlauben in Kombination gleichzeitig eine ausreichend genaue Ermittlung der Verdunstungsrate.

Des Weiteren ist es vorteilhaft wenn der Schritt des Ermittelns der Verdunstungsrate des Behandlungsmittels unter zusätzlicher Verwendung der Größe der Verdunstungsfläche des Verdunstungselements erfolgt. Bei der Behandlung von Bienenstöcken wird die Größe der Verdunstungsfläche vom Imker gemäß der Empfehlung des Verdunstungsherstellers eingestellt. Die Empfehlung für die Größe des Verdunstungselements bzw. der Verdunstungsfläche richtet sich nach der Art und Größe des Bienenstockes, sowie zu erwartender Außentemperatur. Die Verdunstungsrate kann z.B. in vorangegangenen Versuchen in Abhängigkeit von der Temperatur, der Luftfeuchtigkeit und der Größe der Verdunstungsfläche aufgezeichnet werden.

Diese Größen werden in Form von Kennfeldern abgelegt und entsprechend ausgelesen. Hierdurch lässt dich die Verdunstungsrate noch genauer ermitteln.

Vorteilhaft ist es ferner, wenn der folgende weitere Schritt durchgeführt wird:
- Speichern der ermittelten Verdunstungsrate zusammen mit einem Zeitparameter, welcher einen Erfassungszeitpunkt der entsprechenden erfassten Messwerte repräsentiert, in einer Speichereinheit.
Hierbei ist es insbesondere vorteilhaft, wenn ferner der folgende weitere Schritt durchgeführt wird:
- Übertragen der ermittelten Verdunstungsrate zusammen mit einem Zeitparameter, welcher einen Erfassungszeitpunkt der entsprechenden erfassten Messwerte repräsentiert, an eine Anzeigeeinheit.
Der Erfassungszeitpunkt kann hierbei der Mittelwert der Erfassungszeitpunkte der entsprechenden erfassten Messwerte sein. Durch diese Maßnahme kann die Historie der Verdunstungsrate angelegt und abgerufen bzw. angezeigt werden, so dass bspw. der Imker sehen kann, wie oft und für wie lange die erforderlichen bzw. gewünschten Werte nicht eingehalten wurden. Somit ist es ihm möglich frühzeitig in die Behandlung einzugreifen und den Behandlungserfolg zu sichern.

Es ist außerdem vorteilhaft, wenn die folgenden weiteren Schritte durchgeführt werden:
- Vergleichen der ermittelten Verdunstungsrate des Behandlungsmittels mit mindestens einem Schwellenwert mittels der Rechnereinheit; und
- Ausgeben eines Alarmsignals bei Erreichung, Unterschreitung oder Überschreitung eines des mindestens einen Schwellenwerts mittels einer Anzeigeeinheit.
Der Schwellenwert kann insbesondere manuell eingegeben, berechnet und/oder aus einer Tabelle ausgelesen werden. Der Schwellenwert kann ein vom Behandlungsmittelhersteller vorgegebener Wert der Verdunstungsrate sein. Die erforderliche Verdunstungsrate bzw.- menge hängt u.a. von der Größe des Bienenstocks und der Konzentration des Behandlungsmittels ab. Die Anzeigeeinheit kann ein Smartphone oder ein beliebiges anderes Endgerät, wie bspw. ein Tablet oder ein PC sein. Das Alarmsignal kann bspw. ausgewählt sein aus der Liste bestehend aus: SMS, E-Mail, Push-Notification, Telefonanruf. Die Anzeigeeinheit kann die Rechnereinheit umfassen. Hierdurch kann der Imker bei Abweichung oder bei Erreichung der ermittelten tatsächlichen Verdunstungsrate zu der erforderlichen bzw. gewünschten Verdunstungsrate ein Alarmsignal erhalten, so dass er frühzeitig in die Behandlung einreifen kann, um den Behandlungserfolg zu sichern.

### Zeichnungen

Die Erfindung wird nachstehend anhand der beigefügten Zeichnungen beispielhaft näher erläutert. Es zeigen:
- Figur 1: eine schematische Darstellung eines erfindungsgemäßen Systems zur Fernüberwachung einer Verdunstungsrate eines Behandlungsmittels in Bienenstöcken;
- Figur 2: ein Ablaufdiagramm eines Verfahrens zur Fernüberwachung einer Verdunstungsrate eines Behandlungsmittels gemäß einem ersten Ausführungsbeispiel; und
- Figur 3: ein Ablaufdiagramm eines Verfahrens zur Fernüberwachung einer Verdunstungsrate eines Behandlungsmittels gemäß einem weiteren Ausführungsbeispiel.

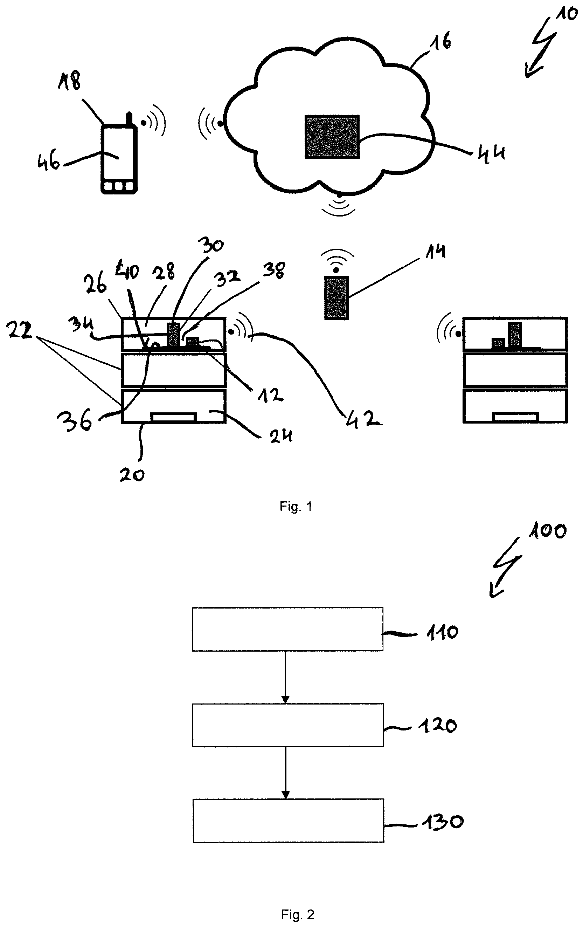

In Fig. 1 ist ein erfindungsgemäßes System zur Fernüberwachung einer Verdunstungsrate eines Behandlungsmittels in seiner Gesamtheit mit der Bezugsziffer 10 versehen.

Das System 10 weist eine Sensoreinheit 12, eine Kommunikationseinheit 14, eine Rechnereinheit 16 und eine Anzeigeeinheit 18 auf.

Da das in Fig. 1 gezeigte System 10 zur Fernüberwachung eines Bienenstocks 20 ausgebildet ist, sind ferner zwei Bienenstöcke bzw. zwei Bienenbeuten 20 gezeigt. Die Bienenbeuten 20 sind gleich bzw. ähnlich aufgebaut, weshalb nachfolgend bei der Beschreibung lediglich auf eine der beiden Bezug genommen wird. Die Fernüberwachung der Bienenstöcke 20 soll insbesondere der Überwachung der Bekämpfung von Varroamilben dienen, um es Imkern zu ermöglichen, die Erfolgsaussichten der Varroabehandlung einzuschätzen und ggf. rechtzeitig zu reagieren.

Die Bienenbeute 20 weist zwei Bienenzargen 22 auf, welche einen Brutraum 24 für die Bienen ausbilden. Die Bienenbeute 20 weist ferner eine Deckelzarge 26 auf, welche auf den Bienenzargen 22 angeordnet ist. Die Deckelzarge 26 bildet einen Verdunstungsraum 28 aus.

In dem Verdunstungsraum 28 der Bienenbeute 20 ist eine Verdunstungsvorrichtung 30 angeordnet. Die Verdunstungsvorrichtung 30 weist einen Vorratsbehälter 32 auf, in dem ein abzugebendes Behandlungsmittel 34 angeordnet ist. Das Behandlungsmittel 34 ist hierbei Ameisensäure und dient zur Bekämpfung der Varroamilben. Die Verdunstungsvorrichtung 30 weist ferner ein Verdunstungselement 36 auf. Die Verdunstungsvorrichtung 30 ist ausgebildet, um das Behandlungsmittel 34 von dem Vorratsbehälter 32 über das Verdunstungselement 36 in den Verdunstungsraum 28 der Bienenbeute 20 verdunsten zu lassen. Hierbei verdunstet das Behandlungsmittel 34, welches flüssig ausgebildet ist, flächig von dem Verdunstungselement 36 in den Verdunstungsraum 28, um sich dann in der gesamten Bienenbeute 20 und insbesondere im Braumraum 24 auszubreiten.

Die Sensoreinheit 12 ist ebenfalls in der Deckelzarge 26 bzw. dem Verdunstungsraum 28 angeordnet. Die Sensoreinheit 12 weist Sensorelemente zur Messung einer ersten physikalischen Größe, nämlich der Lufttemperatur, und einer zweiten physikalischen Größe, nämlich der Luftfeuchtigkeit, auf. Die Sensoreinheit 12 ist angeordnet bzw. ausgebildet, um die Lufttemperatur und die Luftfeuchtigkeit einer Umgebung 38 des Verdunstungselements 36 bzw. einer Verdunstungsfläche 40 des Verdunstungselements 36 zu erfassen bzw. zu messen. Hierbei ist die Sensoreinheit 12 ausgebildet, um in zeitlich zueinander beabstandeten Zeitpunkten erste Messwerte, welche die erste physikalische Größe, d.h. die Temperatur repräsentieren sowie zudem in zeitlich zueinander beabstandeten Zeitpunkten zweite Messwerte, welche die zweite physikalische Größe, d.h. die Feuchtigkeit repräsentieren, zu erfassen. Des Weiteren weist die Sensoreinheit 12 eine Sendeeinheit 42 auf, um die zeitlich beabstand erfassten ersten und zweiten Messwerte an die Kommunikationseinheit 14 zu übertragen bzw. zu senden.

Die Kommunikationseinheit 14 ist mit beiden Bienenstöcken 20 kommunikativ verbunden und ausgebildet, die Messwerte von beiden Bienenstöcken 20 zu empfangen. Die Kommunikationseinheit 14 ist ferner mit der Rechnereinheit 16 kommunikativ verbunden und ausgebildet, die empfangenen Messwerte an die Rechnereinheit 16 zu übertragen.

Die Rechnereinheit 16 ist wiederum ausgebildet, die von der Kommunikationseinheit 14 übertragenen zeitlich beabstandet erfassten Messwerte zu empfangen und zusammen mit einem Zeitparameter, welcher den Erfassungszeitpunkt des jeweiligen Messwertes repräsentiert, in einer Speichereinheit 44 abzulegen. Die Rechnereinheit 16 ist hierbei als Servereinheit ausgebildet. Die Rechnereinheit 16 ist ferner ausgebildet, die Verdunstungsrate des Behandlungsmittels 34 unter Verwendung der zeitlich beabstandet erfassten ersten Messwerte der ersten physikalischen Größe und der zeitlich beabstandet erfassten zweiten Messwerte der zweiten physikalischen Größe zu ermitteln, bspw. durch Berechnung oder mittels Auslesen aus einer abgelegten Tabelle.

Hierbei ist die Rechnereinheit 16 ferner ausgebildet, die Verdunstungsrate des Behandlungsmittels 34 unter Verwendung der Größe der Verdunstungsfläche 40 zu ermitteln. Die Größe der Verdunstungsfläche kann manuell eingegeben oder aus einer Tabelle ausgelesen werden. Die Rechnereinheit 16 ist ferner ausgebildet, die ermittelten Verdunstungsraten des Behandlungsmittels 34 mit mindestens einem Schwellenwert zu vergleichen und bei Erreichung, Unterschreitung oder Überschreitung des Schwellenwerts ein Alarmsignal auszusenden und mittels der Anzeigeeinheit 18 auszugeben. Der Schwellenwert kann manuell eingegeben, berechnet und/oder aus einer Tabelle ausgelesen werden.

Die Rechnereinheit 16 ist außerdem ausgebildet, die ermittelten Verdunstungsraten zusammen mit einem Zeitparameter, welcher den Erfassungszeitpunkt bzw. einen Mittelwerte der Erfassungszeitpunkte der entsprechenden erfassten ersten und zweiten Messwerte repräsentiert, in der Speichereinheit 44 abzulegen. Die Rechnereinheit 16 ist des Weiteren kommunikativ mit der Anzeigeeinheit 18 verbunden und ausgebildet, die erfassten ersten und zweiten Messwerte sowie die ermittelten Verdunstungsraten jeweils zusammen mit den entsprechenden Zeitparametern an die Anzeigeeinheit 18 zu übertragen.

Die Anzeigeeinheit 18 ist wiederum ausgebildet, die erfassten ersten und zweiten Messwerte sowie die ermittelten Verdunstungsraten zu empfangen und auf einem Display 46 für einen Benutzer zu visualisieren. Die Anzeigeeinheit ist ferner ausgebildet, das vorangehend erläuterte Alarmsignal zu empfangen und auszugeben, bspw. visuell, auditiv oder kinästhetisch. Die Anzeigeeinheit 18 ist ferner ausgebildet, die Historie der ermittelten Verdunstungsraten anzuzeigen.

Fig. 2 zeigt ein Ablaufdiagramm eines ersten Ausführungsbeispiels als Verfahren 100 zur Fernüberwachung einer Verdunstungsrate eines Behandlungsmittels 34, welches von einem Verdunstungselement 36, insbesondere in einem Bienenstock 20 abgegeben wird. Das Verfahren 100 umfasst einen Schritt 110 des Erfassens einer ersten physikalischen Größe des Verdunstungselements 36 oder einer Umgebung 38 des Verdunstungselements 36, mittels einer Sensoreinheit 12. Ferner umfasst das Verfahren 100 einen Schritt 120 des Übertragens von zeitlich beabstandet erfassten ersten Messwerten, welche die erste physikalische Größe repräsentieren, an eine Rechnereinheit 16 mittels einer Kommunikationseinheit 14. Schließlich umfasst das Verfahren 100 einen Schritt 130 des Ermittelns der Verdunstungsrate des Behandlungsmittels 34 unter Verwendung der zeitlich beabstandet erfassten ersten Messwerte der ersten physikalischen Größe mittels der Rechnereinheit 16.

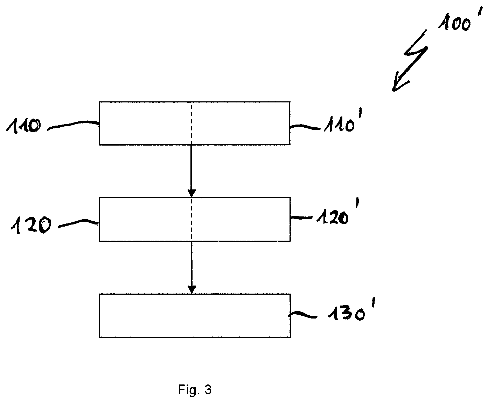

Fig. 3 zeigt ein Ablaufdiagramm eines weiteren Ausführungsbeispiels des hier vorgestellten Ansatzes als Verfahren 100' zur Fernüberwachung einer Verdunstungsrate. Das Verfahren 100' umfasst zusätzlich zu dem Verfahren 100 aus Fig. 2 einen Schritt 110' des Erfassens einer zweiten physikalischen Größe einer Umgebung 38 des Verdunstungselements mittels einer Sensoreinheit 12, wobei die zweite physikalische Größe von der ersten physikalischen Größe verschieden ist. Ferner umfasst das Verfahren 100' zusätzlich einen Schritt 120' des Übertragens von zeitlich beabstandet erfassten zweiten Messwerten, welche die zweite physikalische Größe repräsentieren, an eine Rechnereinheit 16 mittels einer Kommunikationseinheit 14. Schließlich umfasst das Verfahren 100' einen Schritt 130' des Ermittelns der Verdunstungsrate des Behandlungsmittels 34. Allerdings erfolgt im Gegensatz zu dem Verfahren 100 aus Fig. 2 die Ermittlung unter Verwendung der zeitlich beabstandet erfassten ersten Messwerte der ersten physikalischen Größe sowie der zeitlich beabstandet erfassten zweiten Messwerte der zweiten physikalischen Größe mittels der Rechnereinheit 16.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100, 100') zur Fernüberwachung einer Verdunstungsrate eines Behandlungsmittels (34), welches von einem Verdunstungselement (36), insbesondere in einem Bienenstock (20) abgegeben wird, **gekennzeichnet durch** die folgenden Schritte:
- Erfassen (110) einer ersten physikalischen Größe des Verdunstungselements (36) oder der Umgebung (38) des Verdunstungselements (36), mittels einer Sensoreinheit (12);
- Übertragen (120) von zeitlich beabstandet erfassten ersten Messwerten, welche die erste physikalische Größe repräsentieren, an eine Rechnereinheit (16) mittels einer Kommunikationseinheit (14); und
- Ermitteln (130) der Verdunstungsrate des Behandlungsmittels (34) unter Verwendung der zeitlich beabstandet erfassten ersten Messwerte der ersten physikalischen Größe mittels der Rechnereinheit (16).

2. Verfahren (100, 100') nach Anspruch 1, **dadurch gekennzeichnet, dass** die erste physikalische Größe eine Masse des Verdunstungselements (36) oder eine Konzentration des verdunsteten Behandlungsmittels (34) in der Luft in der Umgebung (38) des Verdunstungselements (36) ist.

3. Verfahren (100, 100') nach Anspruch 1, **gekennzeichnet durch** die weiteren Schritte:
- Erfassen (110') einer zweiten physikalischen Größe der Umgebung (38) des Verdunstungselements (36) mittels der Sensoreinheit (12), wobei die zweite physikalische Größe von der ersten physikalischen Größe verschieden ist; und
- Übertragen (120') von zeitlich beabstandet erfassten zweiten Messwerten, welche die zweite physikalische Größe repräsentieren, an die Rechnereinheit (16) mittels der Kommunikationseinheit (14);
- wobei der Schritt des Ermittelns (130) der Verdunstungsrate des Behandlungsmittels (34) unter zusätzlicher Verwendung der zeitlich beabstandet erfassten zweiten Messwerte der zweiten physikalischen Größe mittels der Rechnereinheit (16) erfolgt.

4. Verfahren (100, 100') nach Anspruch 3, **dadurch gekennzeichnet, dass** die erste physikalische Größe eine Lufttemperatur in der Umgebung (38) des Verdunstungselements (36) und die zweite physikalische Größe eine Luftfeuchtigkeit in der Umgebung (38) des Verdunstungselements (36) ist.

5. Verfahren (100, 100') nach einem der vorhergehenden Ansprüche, **dadurch gekennzeichnet, dass** der Schritt des Ermittelns (130) der Verdunstungsrate des Behandlungsmittels (34) unter zusätzlicher Verwendung der Größe einer Verdunstungsfläche (40) des Verdunstungselements (36) erfolgt.

6. Verfahren (100, 100') nach einem der vorhergehenden Ansprüche, **dadurch gekennzeichnet, dass** im Schritt des Ermittelns (130) der Verdunstungsrate des Behandlungsmittels (34) die Verdunstungsrate berechnet und/oder aus einer Tabelle ausgelesen wird.

7. Verfahren (100, 100') nach einem der vorhergehenden Ansprüche, **gekennzeichnet durch** den weiteren Schritt:
- Speichern der ermittelten Verdunstungsrate zusammen mit einem Zeitparameter, welcher einen Erfassungszeitpunkt der entsprechenden erfassten Messwerte repräsentiert, in einer Speichereinheit (44).

8. Verfahren (100, 100') nach einem der vorhergehenden Ansprüche, **gekennzeichnet durch** den weiteren Schritt:
- Übertragen der ermittelten Verdunstungsrate zusammen mit einem Zeitparameter, welcher einen Erfassungszeitpunkt der entsprechenden erfassten Messwerte repräsentiert, an eine Anzeigeeinheit (18).

9. Verfahren (100, 100') nach Anspruch 8, **gekennzeichnet durch** die weiteren Schritte:
- Vergleichen der ermittelten Verdunstungsrate des Behandlungsmittels (34) mit mindestens einem Schwellenwert mittels der Rechnereinheit (16); und
- Ausgeben eines Alarmsignals bei Erreichung, Unterschreitung oder Überschreitung eines des mindestens einen Schwellenwerts mittels einer Anzeigeeinheit (18).

10. Verfahren (100, 100') nach Anspruch 9, **dadurch gekennzeichnet, dass** der Schwellenwert manuell eingegeben, berechnet und/oder aus einer Tabelle ausgelesen wird.

11. Verfahren (100, 100') nach einem der vorhergehenden Ansprüche, **dadurch gekennzeichnet, dass** die Umgebung (38) des Verdunstungselements (36), in der die erste physikalische Größe und/oder die zweite physikalische Größe erfasst werden, außerhalb eines Brutraumes (24) eines Bienenstocks (20) ist.

12. Verfahren (100, 100') nach einem der vorhergehenden Ansprüche, **dadurch gekennzeichnet, dass** das Behandlungsmittel (34) ein Schädlingsbekämpfungsmittel, insbesondere zur Bekämpfung von Varroamilben ist, wobei das Behandlungsmittel (34) vorzugsweise Ameisensäure oder Oxalsäure aufweist oder aus Ameisensäure oder Oxalsäure besteht.

13. System (10) zur Fernüberwachung einer Verdunstungsrate eines Behandlungsmittels (34), welches von einem Verdunstungselement (36), insbesondere in einem Bienenstock (20) abgegeben wird, wobei das System (20) ausgebildet ist, das Verfahren gemäß einem der Ansprüche 1 bis 12 durchzuführen.

14. System (10) zur Fernüberwachung einer Verdunstungsrate eines Behandlungsmittels (34), welches von einem Verdunstungselement (36), insbesondere in einem Bienenstock (20) abgegeben wird, mit
- einer Sensoreinheit (12), welche ausgebildet ist eine erste physikalische Größe des Verdunstungselements (36) oder der Umgebung (38) des Verdunstungselements (36) zu ermitteln;
- einer Kommunikationseinheit (14), welche ausgebildet ist zeitlich beabstandet erfassten erste Messwerte, welche die erste physikalische Größe repräsentieren, zu übertragen; und
- einer Rechnereinheit (16), welche ausgebildet ist, die von der Kommunikationseinheit (14) übertragenen zeitlich beabstandet erfassten ersten Messwerte zu empfangen und die Verdunstungsrate des Behandlungsmittels (34) unter Verwendung der zeitlich beabstandet erfassten ersten Messwerte der ersten physikalischen Größe zu ermitteln.

15. Verwendung einer Sensoreinheit (12) zur Fernüberwachung einer Verdunstungsrate eines Behandlungsmittels (34), welches von einem Verdunstungselement (36), insbesondere in einem Bienenstock (20) abgegeben wird, wobei die Sensoreinheit (12)
- einen Massesensor und/oder
- einen Konzentrationssensor und/oder
- einen Temperatursensor und einen Feuchtigkeitssensor
umfasst.
